# FASCICULE DE BREVET EUROPEEN

(11) **EP 1 380 551 B1**
(45) Date de publication et mention de la délivrance du brevet: **04.05.2005**
(21) Numéro de dépôt: 03356107.7
(22) Date de dépôt: 08.07.2003
(51) Int. Cl.: C03B 27/044, C03B 35/18

(54) **Unité de trempe pour machine de pressage-cintrage de feuilles de verre**
Vorrichtung zum Vorspannen von Glascheiben für eine Pressbiegestation
Tempering unit for a press bending machine of glass sheets

(30) Priorité: 09.07.2002 FR 0208620
(43) Date de publication de la demande: 14.01.2004
(73) Titulaire: G.M.C. For Glass Industry Pour l'industrie du Verre, 69200 Venissieux (FR)
(72) Inventeur: Marmonier, Guy, Marcel, Gilbert, Roland, 69200 Venissieux (FR)
(74) Mandataire: Myon, Gérard

(56) Documents cités:
- DE-A- 2 205 149
- US-A- 4 711 655
- US-A- 5 009 693
- US-A- 5 188 651
- US-A- 5 983 675
- US-B1- 6 378 339
- PATENT ABSTRACTS OF JAPAN vol. 008, no. 156 (C-234), 19 juillet 1984 (1984-07-19) -& JP 59 057923 A (NIHON ITA GLASS KK), 3 avril 1984 (1984-04-03)

## Description

L'invention a trait à une unité de trempe pour une machine de pressage-cintrage de feuilles de verre.

Dans les machines de pressage-cintrage de feuilles de verre, il est connu de refroidir une feuille de verre après son cintrage afin de figer sa forme à la géométrie souhaitée. Cette opération de refroidissement brusque est couramment dénommée « trempe » et a lieu en dirigeant un fluide de refroidissement, tel que de l'air ou un gaz inerte, en direction des faces opposées d'une feuille de verre.

Il est connu de US-A-5,009,693 d'utiliser des tubes de soufflage alimentés en air et pourvus d'orifices de sortie disposés à proximité des faces opposées des feuilles de verre cintrées. Pour déplacer les feuilles de verre dans l'unité de trempe et compte tenu de la géométrie des tubes de soufflage, des roulettes mécanisées sont prévues à l'extrémité de ces tubes, ces roulettes étant associées à un mécanisme d'entraînement complexe, donc onéreux, et dont la fiabilité laisse à désirer, notamment du fait d'une pollution par le calcin. Il est également connu de EP-A-0 448 884 d'utiliser des caissons à buses alimentés en air de refroidissement par des manchons flexibles. Ces caissons à buses sont relativement délicats à positionner par rapport à une feuille de verre cintrée et ne sont pas compatibles avec toutes les géométries envisageables pour des feuilles de verre cintrées.

Il est également connu de US-B-6,378,339 de monter des roulettes sur des supports, eux-mêmes montés sur des tubes pourvus de boîtes de soufflage d'air. Ces tubes sont mobiles selon des directions non-verticales et déplacent avec eux les roulettes. Il en résulte que les rouleaux de convoyage associés aux roulettes doivent être flexibles et que leurs systèmes d'entraînement respectifs sont relativement complexes.

C'est à ces inconvénients qu'entend plus particulièrement remédier l'invention en proposant une unité de trempe pour une machine de pressage-cintrage de feuilles de verre, dans laquelle une trempe efficace des feuilles de verre peut avoir lieu, sans qu'il soit nécessaire d'avoir recours à des mécanismes d'entraînement compliqués, tout particulièrement en permettant d'utilisation de rouleaux de convoyage s'étendant chacun selon une direction sensiblement horizontale et perpendiculaire à la direction de convoyage des feuilles de verre.

Dans cet esprit, l'invention concerne une unité de trempe pour une machine de pressage-cintrage de feuilles de verre, cette unité étant équipée de tubes d'amenée d'un fluide de refroidissement à proximité d'une feuille de verre à tremper, ces tubes s'étendant chacun globalement selon une direction parallèle à la direction de convoyage de feuilles de verre dans cette unité, chaque tube étant pourvu de plusieurs orifices d'éjection de fluide de refroidissement en direction d'une feuille de verre à tremper cette unité étant équipée d'un convoyeur formé par la juxtaposition de rouleaux disposés avec leurs axes longitudinaux horizontaux et globalement perpendiculaires à la direction de convoyage, caractérisée en ce que la position des tubes est réglable, sans interférence avec les rouleaux de convoyage, selon une direction verticale et perpendiculaire à la direction de convoyage et en ce que chaque tube est pourvu d'au moins une encoche dans laquelle peut être engagé un rouleau de convoyage des feuilles de verre à l'intérieur de l'unité de trempe.

Grâce à l'invention, les encoches prévues dans les tubes d'amenée de l'air de refroidissement permettent d'utiliser, pour le convoyage des feuilles de verre à l'intérieur de l'unité de trempe, des rouleaux motorisés disposés avec leurs axes longitudinaux respectifs perpendiculaires à la direction de convoyage et sensiblement horizontaux. Ces rouleaux s'étendent sur toute la largeur de la machine et demeurent fixes en hauteur au cours des opérations de pressage-cintrage, ce qui simplifie grandement leur système d'entraînement par rapport aux dispositifs connus.

Selon des aspects avantageux mais non obligatoires de l'invention, cette unité incorpore une ou plusieurs des caractéristiques suivantes :
- Les tubes d'amenée de fluide de refroidissement sont aptes à être déplacés selon une direction globalement perpendiculaire à la direction de convoyage des feuilles et à la direction des axes longitudinaux des rouleaux. Ces tubes sont avantageusement aptes à être déplacés entre deux positions dont l'une au moins est réglable, pour chaque tube, indépendamment de la position correspondante des autres tubes. Cet aspect de l'invention permet d'adapter le positionnement des tubes, en configuration de trempe d'une feuille de verre, à la géométrie exacte de cette feuille.
- L'un au moins des tubes comprend un élément allongé, s'étendant globalement selon une direction parallèle à la direction de convoyage des feuilles de verre et des boîtes de soufflage montées de façon amovible sur cet élément allongé et pourvues d'orifices d'éjection du fluide de refroidissement. Ce montage amovible des boîtes de soufflage permet d'envisager un échange de ces boîtes en fonction de la géométrie des feuilles de verre à tremper, une boîte pouvant être montée sur un élément allongé en fonction de l'orientation souhaitée de ses orifices de sortie. L'encoche de passage d'un rouleau de convoyage peut être formée entre deux boîtes de soufflage adjacentes. On peut, en outre, prévoir que l'une au moins des boîtes de soufflage est équipée de buses d'éjection d'air.
- Chaque tube est alimenté en fluide de refroidissement à partir d'un distributeur fixe, au moyen d'un élément tubulaire, relié de façon étanche au volume interne du tube et apte à coulisser dans un manchon relié de façon étanche au volume interne du distributeur, des moyens d'étanchéité étant prévus entre cet élément tubulaire et ce manchon. Ces moyens d'étanchéité comprennent avantageusement une bague montée autour de l'élément tubulaire et pourvue d'un joint à lèvre en appui contre cet élément tubulaire, cette bague étant elle-même reliée au manchon par une manchette souple entourant également l'élément tubulaire.
- Les rouleaux du dispositif de convoyage ont une section transversale réduite dans une zone centrale des rouleaux qui est formée par la différence entre le diamètre externe d'un premier tube et les diamètres externes de deux autres tubes dans lesquels est inséré et immobilisé le premier tube.
- Les rouleaux du dispositif de convoyage sont équipés de bagues formant butée à un glissement des feuilles de verre parallèlement aux axes longitudinaux des rouleaux.

L'invention sera mieux comprise et d'autres avantages de celle-ci apparaîtront plus clairement à la lumière de la description qui va suivre d'un mode de réalisation d'une unité de trempe conforme à son principe, donnée uniquement à titre d'exemple et faite en référence aux dessins annexés dans lesquels :
- la figure 1 est une vue par bout d'une unité de trempe conforme à l'invention ;
- la figure 2 est une vue de côté de l'unité de la figure 1 ;
- la figure 3 est une vue en perspective partielle de l'unité des figures 1 et 2 ;
- la figure 4 est une vue à plus grande échelle du détail IV à la figure 2 ;
- la figure 5 est une vue analogue à la figure 1 lorsque la machine est en configuration de refroidissement d'une plaque de verre ;
- la figure 6 est une vue analogue à la figure 2 lorsque la machine est dans la configuration de la figure 5 ;
- la figure 7 est une coupe de principe à plus grande échelle d'un rouleau de convoyage utilisé dans la machine prise dans la configuration de la figure 5 ;
- la figure 8 est une vue analogue à la figure 1 lorsque la machine est dans une seconde configuration d'utilisation et
- la figure 9 est une coupe analogue à la figure 7 alors que la machine est dans la configuration de la figure 8.

L'unité de trempe T représentée sur les figures comprend une superstructure 1 comprenant des montants verticaux 11 et des poutres horizontales 12. Des chariots 2 sont mobiles verticalement par rapport à la structure 1 en étant commandés par des moteurs 3 associés à des renvois d'angle 4 et à des systèmes de guidage appropriés. Chaque chariot 2 supporte un certain nombre de tubes 5 de forme allongée qui s'étendent globalement selon des directions parallèles à la direction X-X' de convoyage de feuilles de verre 6 dans l'unité T. Les tubes 5 sont pourvus de plusieurs orifices d'éjection de gaz de refroidissement répartis sur leur longueur.

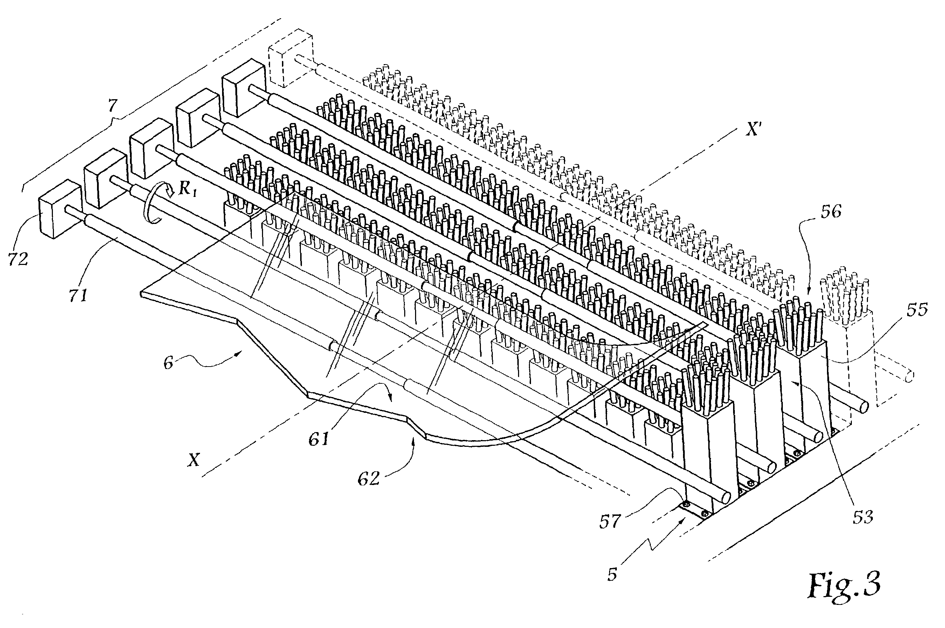

Pour permettre leur convoyage dans l'unité T, les feuilles 6 sont supportées par un convoyeur 7 formé par la juxtaposition de rouleaux rigides 71 disposés avec leurs axes longitudinaux A₇₁ horizontaux et globalement perpendiculaires à la direction X-X'. Chaque rouleau 71, ou certains de ces roulements seulement, est associé à un moteur 72, ce qui permet d'entraîner les rouleaux 71 ou certains d'entre eux seulement, dans le sens des flèches R₁ à la figure 3. Ainsi, les feuilles de verre sortant d'une unité de pressage-cintrage peuvent être déplacées dans l'unité T parallèlement à la direction X-X'.

Afin d'améliorer le guidage des feuilles de verre cintrées, et comme représenté plus particulièrement à la figure 3, les rouleaux 71 sont pourvus, dans leur partie centrale, d'une zone en creux 711 définie par une partie concave de leur génératrice. Plus précisément, chaque rouleau 71 comprend un tube 712 de diamètre relativement petit inséré dans deux tubes 713 et 714 de diamètre plus important, les tubes 712 et 713, d'une part, 712 et 714, d'autre part, étant immobilisés les uns par rapport aux autres grâce à des goupilles 715 et 716. La zone 711 est ainsi formée par la différence des diamètres externes des tubes 712, 713 et 714. La génératrice du rouleau 71, qui est formée par la réunion des génératrice des tubes 713, 712 et 714, est ainsi concave au niveau de la zone 711.

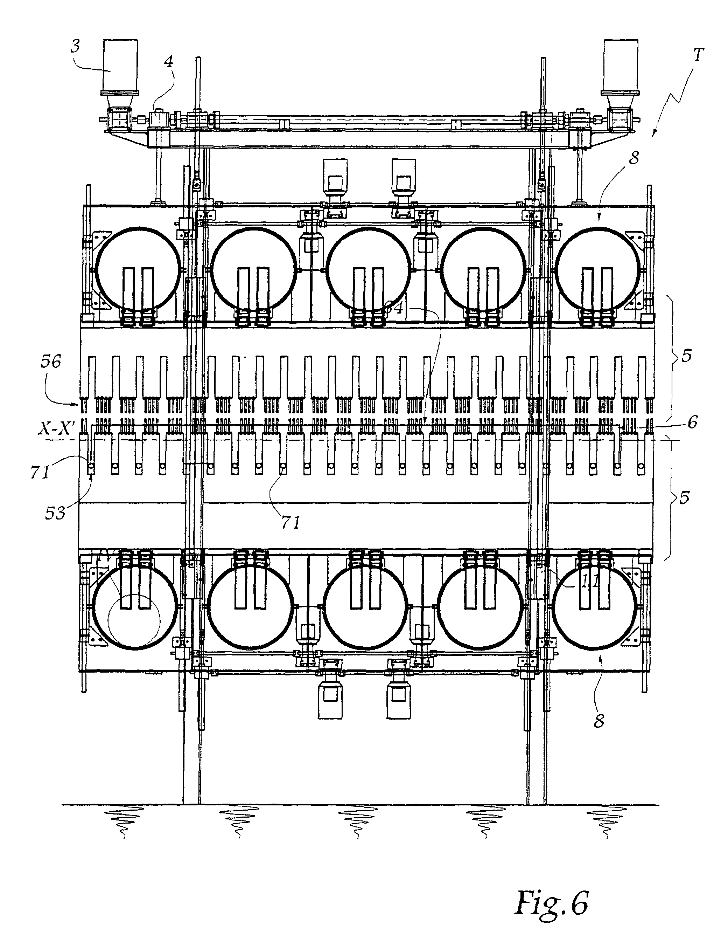

Par ailleurs, les rouleaux 71 sont revêtus d'une gaine 73 en fibres d'aramide suffisamment souple pour se déformer au niveau de la zone 711 sous l'effet du poids d'une feuille de verre cintrée 6. Ainsi, la feuille 6 est supportée par chaque rouleau 71 en étant en appui sur au moins deux points P₁, P₂ situés de part et d'autre d'un plan médian d'un rouleau 71 dont la trace dans le plan de la figure 6 est une droite Z-Z' globalement verticale. La gaine 73 peut également être en fibres de silice ou en micro-fils métalliques.

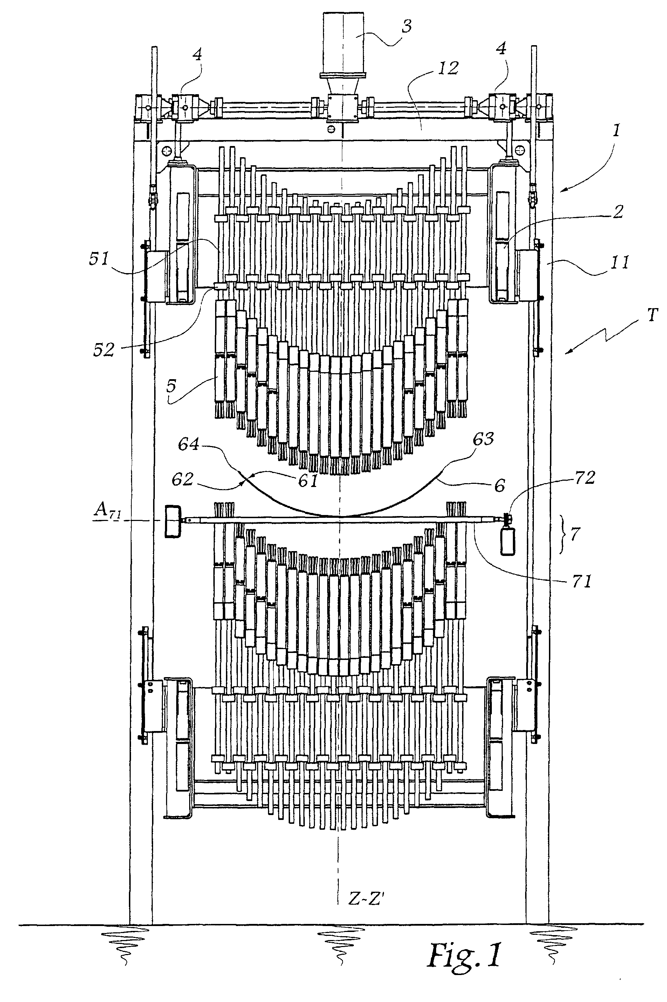

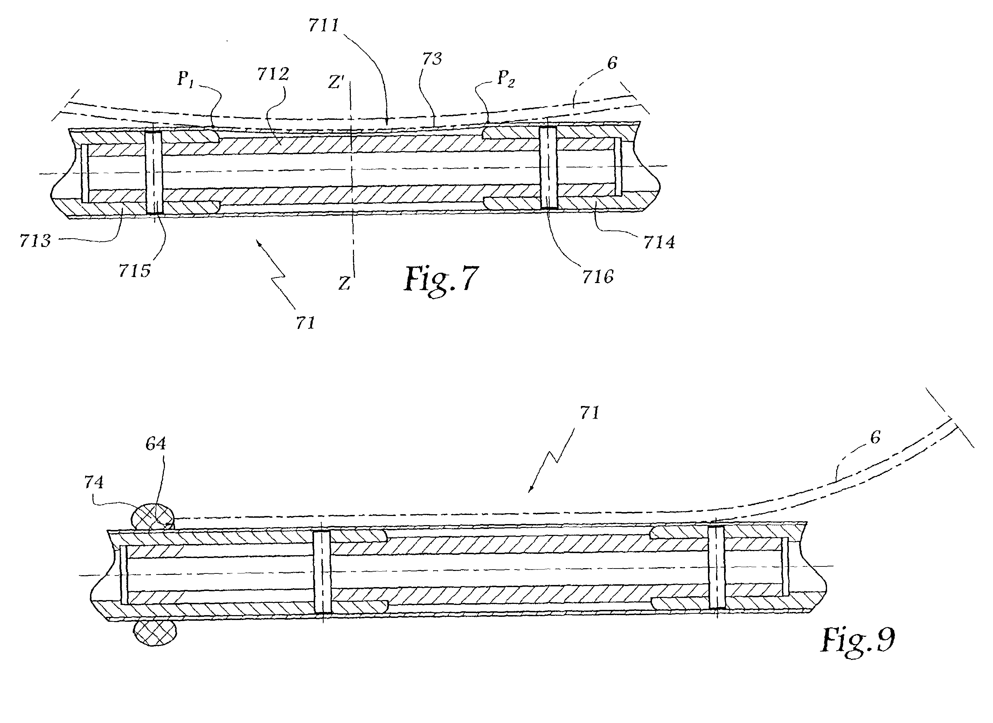

Les tubes 5 sont montés sur les chariots 2 au moyen de tiges 51 associées à des écrous 52, ce qui permet de régler la position des tubes 5 par rapport aux chariots 2 parallèlement à une direction verticale Z-Z' perpendiculaire à la direction X-X'. La position de chaque tube 5 peut ainsi être réglée indépendamment de la position des tubes voisins, de façon à suivre au mieux la géométrie d'une feuille de verre à tremper, ainsi que cela ressort de la comparaison des figures 1, 5 et 7.

Lorsqu'une feuille de verre 6 est acheminée vers l'unité de trempe T, les tubes 5 situés respectivement au-dessus et au-dessous de celles-ci sont écartés les uns des autres pour permettre la circulation de la feuille 6. Les tubes situés au-dessus de la feuille 6 sont alors abaissés alors que les tubes situés au-dessous de celle-ci sont soulevés, de façon à ce que le gaz de refroidissement issu de ces tubes soit éjecté au plus près des surfaces supérieure 61 et inférieure 62 des feuilles 6.

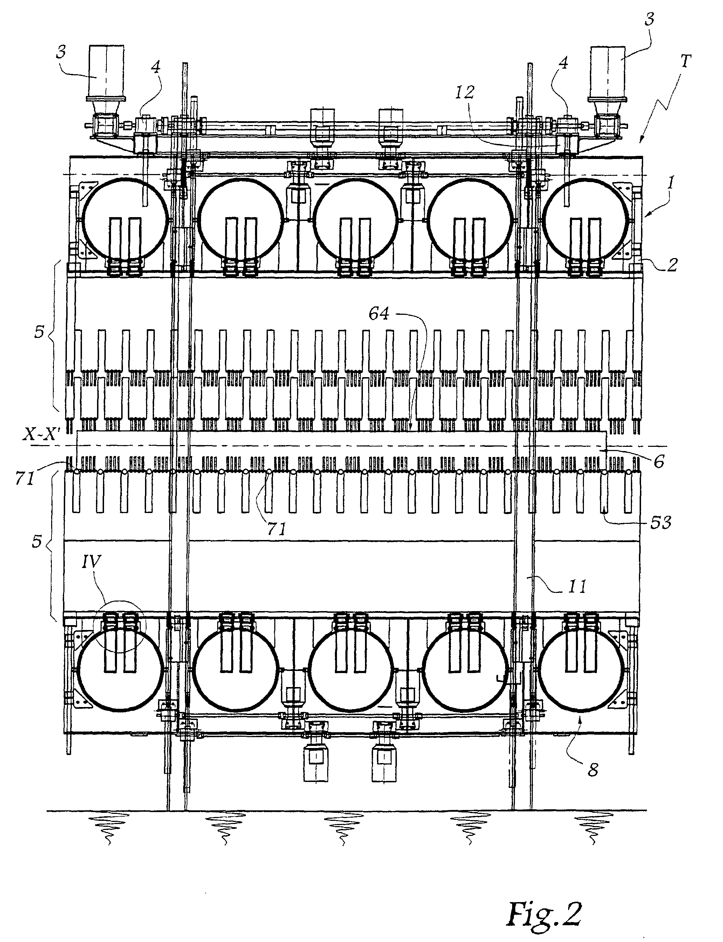

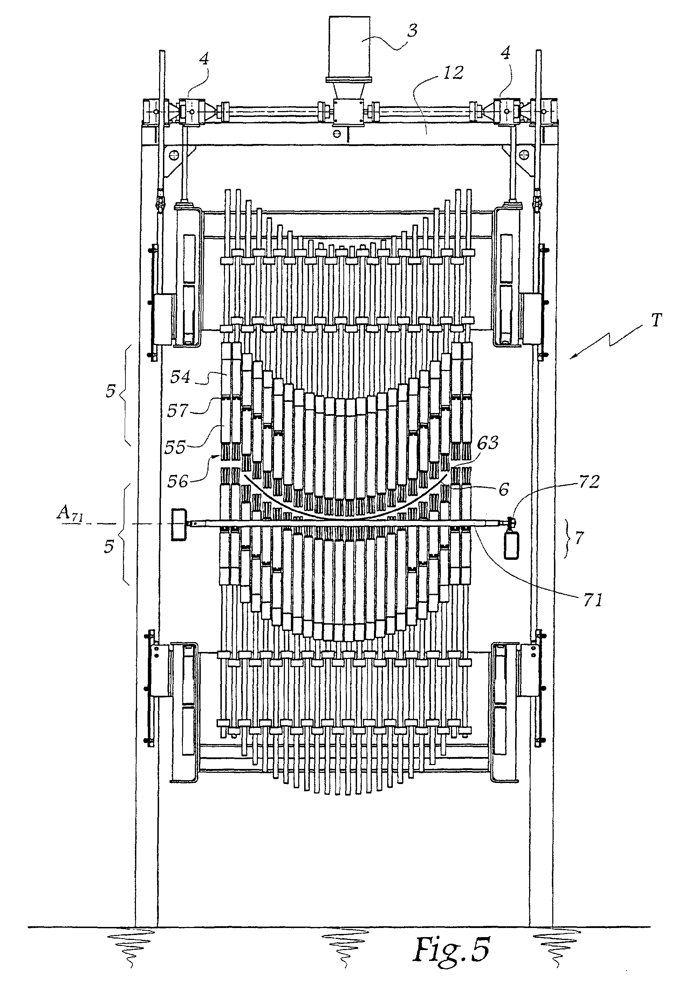

Comme il ressort plus particulièrement des figures 2, 3 et 5, les tubes 5 sont compatibles avec ce mouvement de rapprochement sans interférence avec les rouleaux 71 de convoyage. Pour ce faire, les tubes 5 sont pourvus d'encoches 53 dans lesquelles peuvent être engagés les tubes 71 lorsque les tubes 5 passent de la configuration de la figure 2 à celle de la figure 5.

Chaque tube 5 comprend un élément allongé 54 dont la plus grande dimension est sensiblement parallèle à la direction X-X', ainsi que des boîtes de soufflage 55 faisant saillie globalement selon la direction Z-Z', vers le haut pour les tubes 5 situés en dessous des feuilles 6 et vers le bas pour les tubes 5 situés au-dessus de ces feuilles.

Dans la configuration de la figure 1, chaque boîte de soufflage 55 est équipée de buses 56 constituant les orifices de sortie du gaz de refroidissement, ces buses 56 étant légèrement divergentes les unes par rapport aux autres et dirigées globalement vers le haut pour les buses des tubes 5 inférieurs et vers le bas pour les buses des tubes 5 supérieurs.

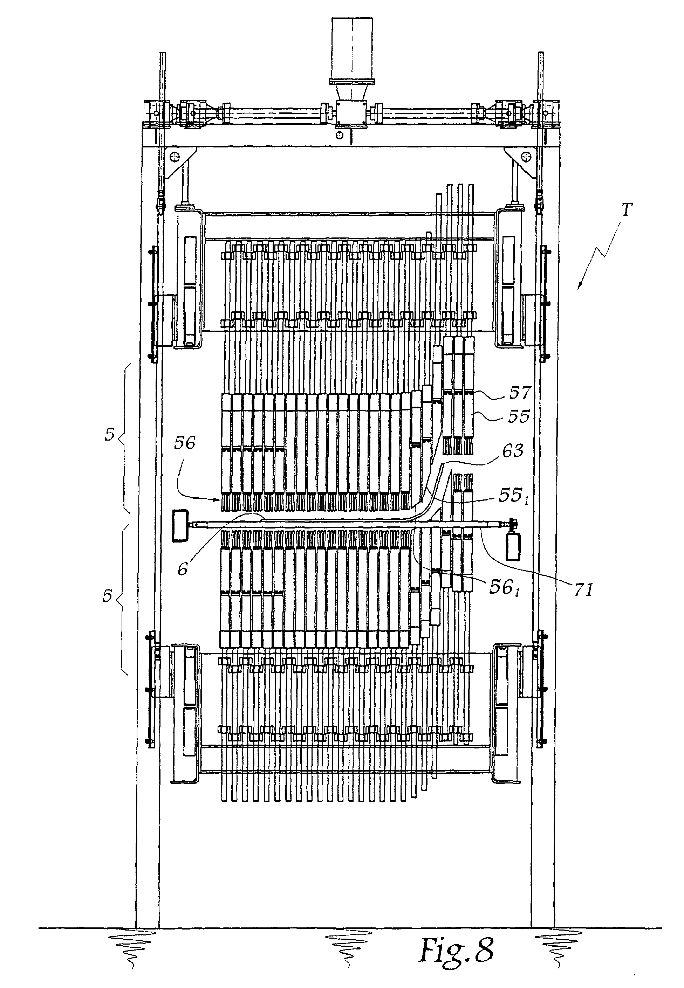

On note que les boîtes 55 des cinq tubes les plus extérieurs de chaque côté de l'unité T à la figure 1 sont montées de façon amovible sur les éléments 54 correspondants, ceci grâce à des vis 57. Ainsi, les boîtes de soufflage 55 peuvent-elles être démontées pour être échangées afin de s'adapter plus spécifiquement à la géométrie souhaitée pour une feuille 6. Par exemple, dans la configuration de la figure 8, des boîtes de soufflage 55₁ dépourvues de buses sont prévues au niveau d'un bord incliné 63 d'une feuille 6. Les orifices de sortie 56₁ des boîtes 55₁, qui ont des géométries différentes les unes des autres afin de « suivre » le bord 63, sont ménagés directement dans les faces supérieures ou latérales de ces boîtes.

Les tubes 5 situés au-dessus des feuilles 6 n'ont généralement pas à être abaissés jusqu'au niveau des rouleaux 71. Dans ces conditions, ils ne risquent pas d'interférer avec ces rouleaux. Cependant, ils présentent sensiblement la même géométrie que les tubes 5 situés au-dessous de ces feuilles 6, ce qui permet d'équilibrer le flux de gaz de refroidissement entre le dessus et le dessous des feuilles 6, ceci afin d'améliorer l'homogénéité de la trempe des surfaces 61 et 62.

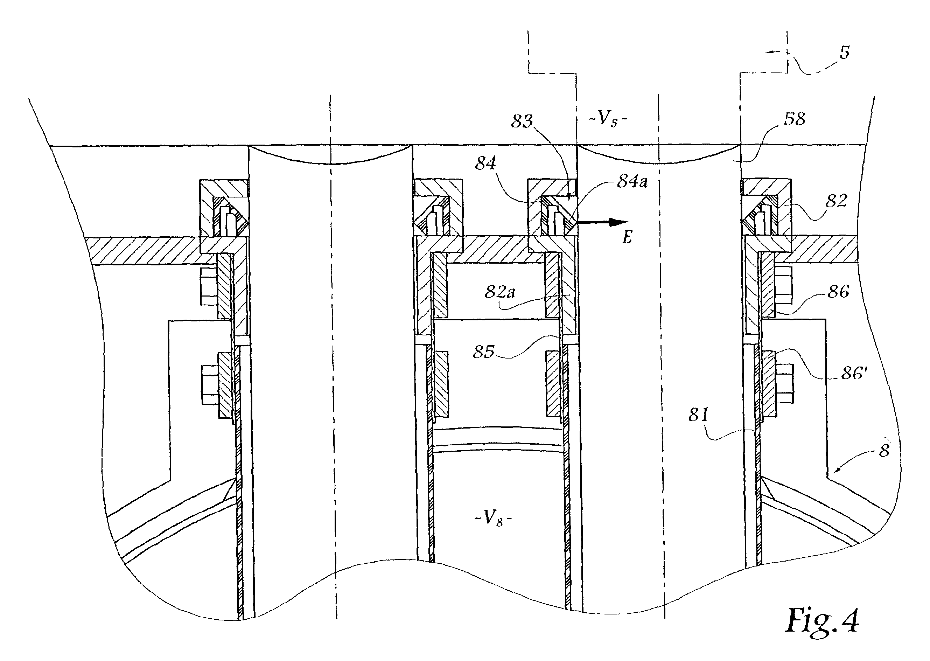

Les tubes 5 sont alimentés en gaz de refroidissement à partir de distributeurs 8 de forme globalement cylindrique fixés sur la superstructure 1. Compte tenu du mouvement relatif des éléments 5 et 8, un dispositif de liaison plus particulièrement visible à la figure 4 est utilisé, ce dispositif comprenant un élément tubulaire 58 à section circulaire soudé en partie basse d'un tube 5 et pénétrant dans un manchon 81 lui-même soudé en partie supérieure du distributeur 8. L'élément 58 est en communication fluidique avec le volume interne V₅ d'un tube 5, alors que le manchon 8 est en communication fluidique avec le volume interne V₈ du distributeur 8. Les liaisons entre les éléments 5 et 58, d'une part, 8 et 81, d'autre part, sont étanches.

Une bague 82 est montée autour de l'élément 58 et forme un logement interne 83 pour un joint à lèvre 84 dont la lèvre 84a est au contact de la surface radiale externe de l'élément 58. La bague 82 comprend une partie tubulaire 82a entourée par une manchette en élastomère 85 fixée sur la partie 82 grâce à un collier 86. La manchette 85 est également fixée sur le manchon 81 grâce à un second collier 86'.

De l'air s'écoulant entre le manchon 81 et la surface externe de l'élément 58 est contenu par la manchette 85 et parvient jusque dans le logement 83 où il exerce sur la lèvre 84 un effort E d'application de la lèvre 84a contre la surface radiale externe de l'élément 58, ce qui a pour effet d'assurer l'étanchéité de cet assemblage. Ainsi, aucun écoulement parasite n'est dirigé vers les feuilles 6 en cours de trempe.

Comme il ressort plus particulièrement de la figure 9, dans la configuration de la figure 8 et pour éviter un glissement d'une feuille 6 vers la gauche sur les figures 8 et 9, des bagues 74, qui peuvent être constituées par des joints toriques ou tout autre structure, sont montées sur les rouleaux 71. Ces bagues servent de butées aux feuilles 6 dont le bord longitudinal gauche 64 est en appui contre ces bagues.

## Revendications

1. Unité de trempe pour machine de pressage-cintrage de feuilles de verre, ladite unité étant équipée de tubes d'amenée d'un fluide de refroidissement à proximité d'une feuille de verre à tremper, lesdits tubes (5) s'étendant chacun globalement selon une direction parallèle à la direction de convoyage (X-X') des feuilles de verre (6) dans ladite unité (T), chaque tube étant pourvu de plusieurs orifices (56, 56₁) d'éjection de fluide de refroidissement en direction d'une feuille de verre à tremper, ladite unité (T) étant équipée d'un convoyeur (7) formé par la juxtaposition de rouleaux (71) disposés avec leurs axes longitudinaux (A₇₁) horizontaux et globalement perpendiculaires à ladite direction de convoyage, **caractérisée en ce que** la position desdits tubes (5) est réglable, sans interférence avec les rouleaux de convoyage, selon une direction (Z-Z') verticale et perpendiculaire à la direction de convoyage et **en ce que** chaque tube est pourvu d'au moins une encoche (53) dans laquelle peut être engagé un rouleau (71) de convoyage.

2. Unité selon la revendication 1, **caractérisée en ce que** lesdits tubes (5) sont aptes à être déplacés selon une direction (Z-Z') globalement perpendiculaire à la direction de convoyage (X-X') des feuilles (6) et à la direction (A₇₁) des axes longitudinaux desdits rouleaux.

3. Unité selon la revendication 2, **caractérisée en ce que** lesdits tubes (5) sont aptes à être déplacés entre deux positions dont l'une au moins est réglable, pour chaque tube, indépendamment de la positon correspondante pour les autres tubes.

4. Unité selon l'une des revendications précédentes, **caractérisée en ce que** l'un au moins desdits tubes comprend un élément allongé (54) s'étendant globalement selon une direction parallèle à la direction de convoyage (X-X') et des boîtes de soufflage (55, 55₁) montées de façon amovible (57) sur ledit élément allongé et pourvues d'orifices (56, 56₁) d'éjection de fluide de refroidissement.

5. Unité selon la revendication 4, **caractérisée en ce que** ladite encoche (53) est formée entre deux boîtes de soufflage adjacentes (55, 55₁).

6. Unité selon l'une des revendications 4 ou 5, **caractérisée en ce que** l'une au moins (55) desdites boîtes de soufflage est équipée de buses (56) d'éjection d'air.

7. Unité selon l'une des revendications précédentes, **caractérisée en ce que** chaque tube (5) est alimenté en fluide de refroidissement à partir d'un distributeur fixe (8), au moyen d'un élément tubulaire (58) relié de façon étanche au volume interne (V₅) dudit tube et apte à coulisser dans un manchon (81) relié de façon étanche au volume interne (V₈) dudit distributeur, des moyens d'étanchéité (82-86) entre ledit élément tubulaire et ledit manchon étant prévus.

8. Unité selon la revendication 7, **caractérisée en ce que** lesdits moyens d'étanchéité comprennent une bague (82) montées autour dudit élément tubulaire (58) et pourvue d'un joint (84) à lèvre (84a) en appui contre ledit élément tubulaire, ladite bague étant reliée audit manchon par une manchette (85) souple entourant également ledit élément tubulaire.

9. Unité selon l'une des revendications précédentes, **caractérisée en ce que** les rouleaux (71) du dispositif de convoyage ont une section transversale réduite dans une zone centrale (711) desdits rouleaux, ladite zone étant formée par la différence entre le diamètre externe d'un premier tube (712) et les diamètres externes de deux autres tubes (713, 714) dans lesquels est inséré et immobilisé ledit premier tube.

10. Unité selon l'une des revendications précédentes, **caractérisée en ce que** les rouleaux (71) du dispositif de convoyage sont équipés de bagues (74) formant butées à un glissement des feuilles de verre parallèlement aux axes longitudinaux (A₇₁) desdits rouleaux.

## Patentansprüche

1. Einheit zum Vorspannen für eine Maschine zum Preßbiegen von Glasplatten, wobei die Einheit mit Rohren zum Zuführen eines Kühlfluids in der Nähe einer vorzuspannenden Glasplatte ausgerüstet ist, wobei die Rohre (5) sich jeweils im wesentlichen entlang einer zur Förderrichtung (X-X') der Glasplatten (6) in der Einheit (T) parallelen Richtung erstrecken, wobei jedes Rohr mit mehreren Öffnungen (56, 56₁) zum Abgeben von Kühlfluid in Richtung auf eine vorzuspannende Glasplatte hin versehen ist, wobei die Einheit (T) mit einem Förderer (7) ausgerüstet ist, welcher durch die nebeneinanderliegende Anordnung von Rollen (71) gebildet ist, die mit ihren Längsachsen (A₇₁) horizontal und im wesentlichen senkrecht zu der Förderrichtung angeordnet sind,
**dadurch gekennzeichnet,**
**daß** die Position der Rohre (5) ohne gegenseitige Störung mit den Förderrollen entlang einer vertikalen und zur Förderrichtung senkrechten Richtung (Z-Z') einstellbar ist,
und **daß** jedes Rohr mit mindestens einer Aussparung (53) versehen ist, in die sich eine Förderrolle (71) einsetzen läßt.

2. Einheit nach Anspruch 1,
**dadurch gekennzeichnet,**
**daß** die Rohre (5) entlang einer Richtung (Z-Z') bewegbar sind, die im wesentlichen senkrecht zur Förderrichtung (X-X') der Platten (6) und zur Richtung (A₇₁) der Längsachsen der Rollen ist.

3. Einheit nach Anspruch 2,
**dadurch gekennzeichnet,**
**daß** die Rohre (5) zwischen zwei Positionen bewegbar sind, von denen mindestens eine für jedes Rohr unabhängig von der entsprechenden Position für die anderen Rohre einstellbar ist.

4. Einheit nach einem der vorhergehenden Ansprüche,
**dadurch gekennzeichnet,**
**daß** mindestens eines der Rohre ein langgestrecktes Element (54) aufweist, das sich im wesentlichen entlang einer zur Förderrichtung (X-X') parallelen Richtung erstreckt, sowie Gebläsekästen (55, 55₁) aufweist, die abnehmbar (57) an dem langgestreckten Element angebracht und mit Öffnungen (56, 56₁) zum Abgeben von Kühlfluid versehen sind.

5. Einheit nach Anspruch 4,
**dadurch gekennzeichnet,**
**daß** die Aussparung (53) zwischen zwei benachbarten Gebläsekästen (55, 55₁) ausgebildet ist.

6. Einheit nach einem der Ansprüche 4 oder 5,
**dadurch gekennzeichnet,**
**daß** mindestens einer (55) der Gebläsekästen mit Düsen (56) zum Abgeben von Luft ausgerüstet ist.

7. Einheit nach einem der vorhergehenden Ansprüche,
**dadurch gekennzeichnet,**
**daß** jedes Rohr (5) aus einem festen Verteiler (8) mit Kühlfluid versorgt wird, und zwar mittels eines rohrförmigen Elementes (58), das in abgedichteter Weise mit dem Innenraum (V₅) des Rohrs verbunden ist und dazu ausgelegt ist, in einer dicht mit dem Innenraum (V₈) des Verteilers verbundenen Hülse (81) zu gleiten, wobei Dichtungseinrichtungen (82-86) zwischen dem rohrförmigen Element und der Hülse vorgesehen sind.

8. Einheit nach Anspruch 7,
**dadurch gekennzeichnet,**
**daß** die Dichtungseinrichtungen einen Ring (82) aufweisen, der um das rohrförmige Element (58) herum angebracht und mit einer Dichtung (84) mit einer gegen das rohrförmige Element anliegenden Lippe (84a) versehen ist, wobei der Ring mit einer elastischen Manschette (85), welche auch das rohrförmige Element umgibt, mit der Hülse verbunden ist.

9. Einheit nach einem der vorhergehenden Ansprüche,
**dadurch gekennzeichnet,**
**daß** die Rollen (71) der Fördereinrichtung in einer mittleren Zone (711) der Rollen einen verringerten Querschnitt aufweisen, wobei diese Zone durch die Differenz zwischen dem Außendurchmesser eines ersten Rohrs (712) und den Außendurchmessern von zwei anderen Rohren (713, 714) gebildet ist, in denen das erste Rohr eingesetzt und festgelegt ist.

10. Einheit nach einem der vorhergehenden Ansprüche,
**dadurch gekennzeichnet,**
**daß** die Rollen (71) der Fördereinrichtung mit Ringen (74) ausgerüstet sind, die einen Anschlag gegen ein Verrutschen der Glasplatten parallel zu den Längsachsen (A₇₁) der Rollen bilden.

## Claims

1. Tempering unit for a machine for pressing-bending sheets of glass, said unit being equipped with tubes for conducting a cooling fluid in proximity to a sheet of glass to be tempered, said tubes (5) each extending substantially according to a direction which is parallel to the conveying direction (X - X') of the sheets of glass (6) into said unit (T), each tube being provided with a plurality of orifices (56, 56₁) for ejecting cooling fluid in the direction of a sheet of glass to be tempered, said unit (T) being equipped with a conveyor (7) which is formed by the juxtaposition of rollers (71) disposed with their longitudinal axes (A₇₁) horizontal and substantially perpendicular to said conveying direction, **characterised in that** the position of said tubes (5) is adjustable, without interference with the conveying rollers, according to a direction (Z - Z') which is vertical and perpendicular to the conveying direction, and **in that** each tube is provided with at least one recess (53) in which a conveying roller (71) can be engaged.

2. Unit according to claim 1, **characterised in that** said tubes (5) are able to be displaced according to a direction (Z - Z') which is substantially perpendicular to the conveying direction (X - X') of the sheets (6) and to the direction (A₇₁) of the longitudinal axes of said rollers.

3. Unit according to claim 2, **characterised in that** said tubes (5) are able to be displaced between two positions, of which the one at least is adjustable, for each tube, independently of the corresponding position for the other tubes.

4. Unit according to one of the preceding claims, **characterised in that** the one at least of said tubes comprises an elongated element (54), which extends substantially according to a direction which is parallel to the conveying direction (X - X'), and blowing boxes (55, 55'), which are mounted in a movable manner (57) on said elongated element and are provided with orifices (56, 56₁) for ejecting cooling fluid.

5. Unit according to claim 4, **characterised in that** said recess (53) is formed between two adjacent blowing boxes (55, 55₁).

6. Unit according to one of the claims 4 or 5, **characterised in that** the one at least (55) of said blowing boxes is equipped with nozzles (56) for ejecting air.

7. Unit according to one of the preceding claims, **characterised in that** each tube (5) is supplied with cooling fluid from a fixed distributor (8), by means of a tubular element (58) which is connected in a sealed manner to the internal volume (V₅) of said tube and is able to slide in a sleeve tube (81), which is connected in a sealed manner to the internal volume (V₈) of said distributor, sealing means (82 - 86) between said tubular element and said sleeve tube being provided.

8. Unit according to claim 7, **characterised in that** said sealing means comprise a ring (82), which is mounted around said tubular element (58) and provided with a lip (84a) seal (84) abutting against said tubular element, said ring being connected to said sleeve tube by a flexible collar (85) which likewise surrounds said tubular element.

9. Unit according to one of the preceding claims, **characterised in that** the rollers (71) of the conveying device have a reduced transverse section in a central zone (711) of said rollers, said zone being formed by the difference between the external diameter of a first tube (712) and the external diameters of two other tubes (713, 714) into which said first tube is inserted and immobilised.

10. Unit according to one of the preceding claims, **characterised in that** the rollers (71) of the conveying device are equipped with rings (74) which form abutments for the sheets of glass to slide parallel to the longitudinal axes (A₇₁) of said rollers.
